Europäisches Patentamt

European Patent Office

Office européen des brevets

(11) Publication number: **0 476 628 A2**

# EUROPEAN PATENT APPLICATION

(21) Application number: **91115861.6**

(22) Date of filing: **18.09.91**

(51) Int. Cl.5: **G06F 9/38**

(30) Priority: **18.09.90 JP 248238/90**

(43) Date of publication of application:
**25.03.92 Bulletin 92/13**

(84) Designated Contracting States:
**DE FR GB**

(71) Applicant: **NEC CORPORATION**
**7-1, Shiba 5-chome Minato-ku**

**Tokyo 108-01(JP)**

(72) Inventor: **Ooi, Yasushi**
**c/o NEC Corporation, 7-1, Shiba 5-chome**
**Minato-ku, Tokyo(JP)**

(74) Representative: **Betten & Resch**
**Reichenbachstrasse 19**
**W-8000 München 5(DE)**

(54) **Pipelined data processing system capable of processing delayed branch instruction.**

(57) A data processing system is configured to determine, on the basis of a delayed branch control bit included in a branch instruction, whether or not an instruction next to the branch instruction should be executed. The system comprises an instruction decoder for decoding the branch instruction to classify the branch instruction into a unconditional branch and a conditional branch, and a branch condition discrimination circuit for generating, on the basis of the branch instruction and the result of instruction execution, a condition satisfaction signal indicative of whether or not the branch condition is satisfied. A branch execution discrimination circuit is coupled to the instruction decoder and the branch condition discrimination circuit and to receive the delayed branch control bit, so as to generate a delayed instruction execution determination signal indicative of whether or not the instruction next to the branch instruction is executed, on the basis of an exclusive-OR between the delayed branch control bit and the condition satisfaction signal when it is judged by the instruction decoder that the branch instruction is the conditional branch instruction.

FIGURE 6

## Background of the Invention

### Field of the invention

The present invention relates to a pipelined data processing system capable of processing a delayed branch instruction.

### Description of related art

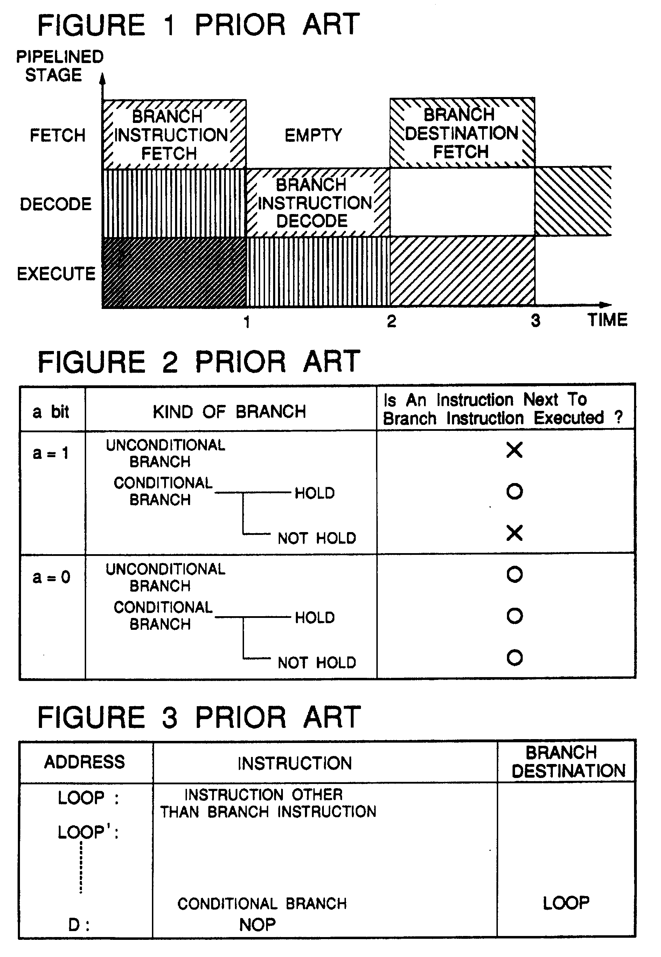

In the prior art, some of conventional pipelined data processing systems has adopted a branch system called a delayed branch. For example, assume that the pipelined processing is composed of three stages: an instruction fetching stage, an instruction decoding stage and an instruction executing stage, as illustrated in Figure 1. In this case, after a branch instruction has been decoded in the instruction decoding stage, a branch destination instruction is fetched in the instruction fetching stage. Therefore, an empty (delayed slot) corresponding to at least one stage occurs in the pipelined processing. The delayed branch system eliminates this waste empty in the pipelined processing by inserting into the delayed slot an operation instruction stored in an address just after an address storing the branch instruction. With this arrangement, it is expected to improve performance (particularly, of a loop) of the pipelined data processing system.

The conventional delayed branch system can be generally divided into the following three systems:

Unconditional Delayed Branch: In this system, an instruction next to all branch instructions is executed. This system is used in a RISC (reduced instruction set computer) type processor "R2000" and others. See KANE 87 (Gerry Kane, "MIPS R2000 RISC Architecture Hall" Prentice Hall, 1987).

Designated Delayed Branch: In some cases, it would be desired to avoid execution of an instruction next to a branch instruction. This demand can be satisfied by causing an instruction to have therein a bit designating whether or not the instruction is a delayed branch. This system is used a digital signal processor "T1320C30" and others. See PAPA8812 (Panos Papamichalis and Ray Simar, Jr., "The TMS320C30 Floating-Point Digital Signal Processor", IEEE Micro, Vol. 8, No. 6, pp. 13-29, Dec., 1988).

Conditional Delayed Branch: In the case of an unconditional branch, it is possible to designate by an instruction whether or not a next instruction should be executed, and on the other hand, in the case of an conditional branch, execution of a next instruction depends upon designation by an instruction and a branch condition.

Now, a conventional example of this conditional delayed branch will be explained with reference to a RISC type processor "SPARC". See GARN8803 (Robert B. Garner et al, "The Scalable Processor Architecture (SPARC)", Digest of Papers, COMPCON '88. The computer society of The IEEE, 1988).

Figure 2 shows, in the SPARC system, how the delayed branch is influenced by a delayed branch inhibit bit ("a" bit) and by satisfaction and unsatisfaction of a condition (whether the condition holds or does not hold). The SPARC system is featured in that in the case of "a" = 1, the delayed branch is executed if the condition holds or is satisfied. This feature is advantageous in the case that a loop is realized by a branch based on a conditional branch instruction in the rear part of an instruction sequence. Here, this advantage will be explained with reference to Figure 3. If an instruction executed only when the condition is satisfied can be written at an address "D", it is possible to copy, into the address "D", instructions which are included in a heading address "LOOP" of the loop and which are other than the branch instruction, and to change the heading address of the loop to an address "LOOP' ". With this, the number of dynamic execution steps in the loop can be reduced by one. Therefore, this is very effective in improving the performance if the number of repetition of the loop is large. In addition, if the address "D" is skipped at the time of terminating the loop, execution of extra instructions can be avoided.

In the SPARC system, if "a" = 0, the delayed branch is executed regardless of whether the condition is hold or does not hold, as seen from Figure 2. This is similar in the other two branch systems. However, this delayed branch does not necessarily give a good effect in the case of a case classification (or situation sorting) processing on the basis of a "if-then-else" clause.

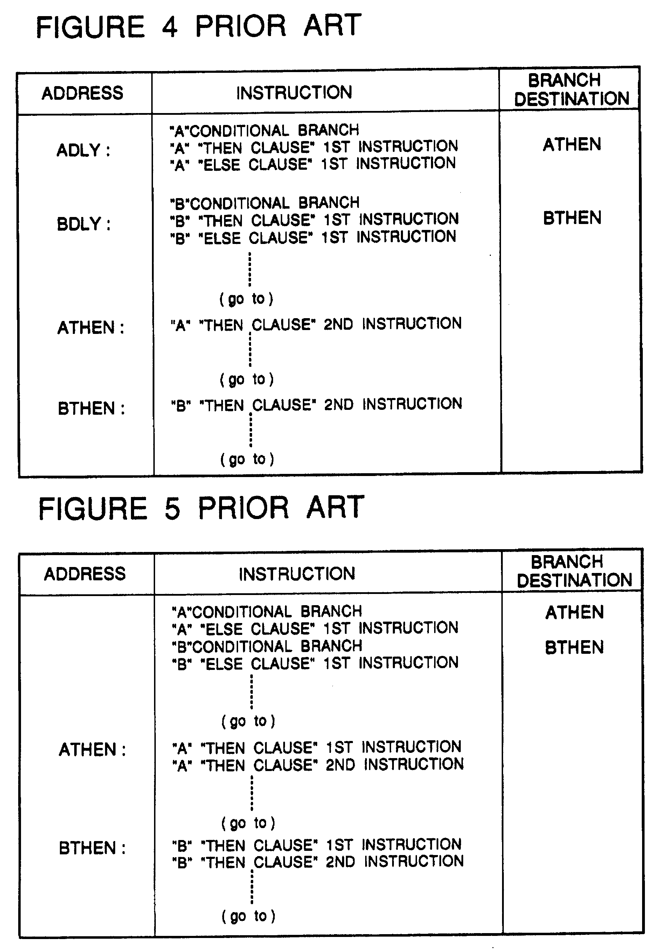

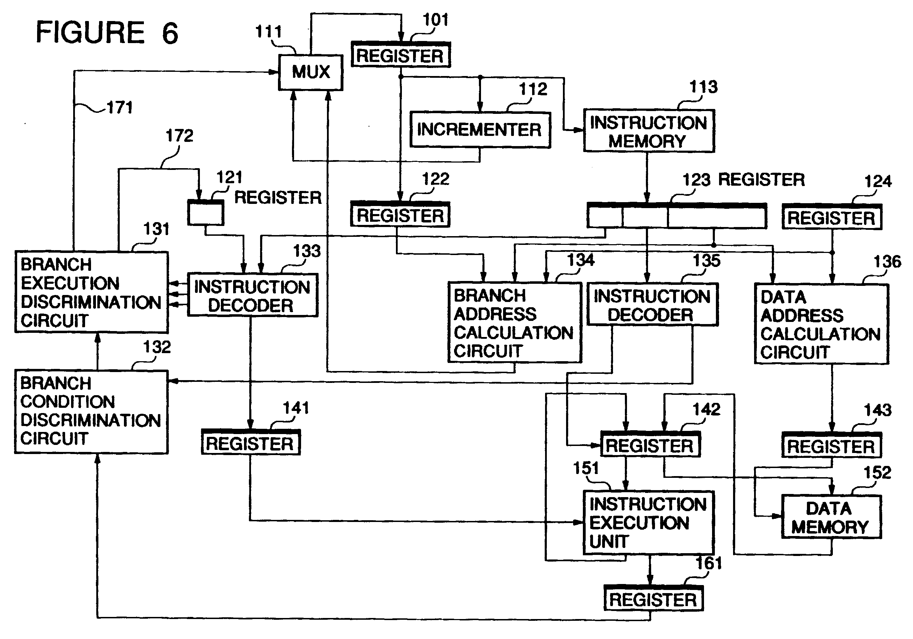

For example, consider a case in which a case classification or categorization is performed by a branch in the front part of an instruction sequence while executing a number of discriminations. If a conditional branch instruction accompanies a delayed branch without exception, a program excepting a condition "A" and a condition "B" as an exception event becomes as shown in Figure 4. An address "ADLY" and an address "BDLY" are a first instruction for a processing of the exception event ("then" clause), and therefore, the processing for an ordinary sequence is delayed by these delayed slots. On the other hand, if this processing is written by using an ordinary branch instruction, not the delayed branch, the program becomes as shown in Figure 5. The test and the omission of the exception events frequently occur in the inside of the loop, and therefore, it is very important to shorten the ordinary sequence in order to improve the performance.

In the SPARC system, the "then" clause is assigned to the ordinary sequence, and the "else" clause is assigned to the exception sequence. With this arrangement, the performance can be improved.

In this case, since the ordinary sequence is ceaselessly skipped by the branch instruction, the easiness of reading the program at an assembly language level is considerably lost.

As seen from the above, the conventional delayed system is not conveniently fitted to both of the realization of the loop and the realization of the case classification, which are two typical manners of utilizing the conditional branch instructions.

Summary of the Invention

Accordingly, it is an object of the present invention to provide a data processing system which has overcome the above mentioned defect of the conventional one.

Another object of the present invention is to provide a data processing system capable of most effectively utilizing the delayed branch by using a conditional delayed branch for realization of the loop, but by not using the delayed branch for realization of the case classification.

The above and other objects of the present invention are achieved in accordance with the present invention by a data processing system capable of determining, on the basis of a delayed branch control bit included in a branch instruction, whether or not an instruction next to the branch instruction should be executed, comprising a first means for decoding the branch instruction to classify the branch instruction into an unconditional branch and a conditional branch, a second means for generating a condition satisfaction signal indicative of whether or not the branch condition is satisfied, and a third means coupled to the first and second means and receiving the delayed branch control bit, the third means generating a delayed instruction execution determination signal indicative of whether or not the instruction next to the branch instruction is executed, on the basis of an exclusive-OR between the delayed branch control bit and the condition satisfaction signal when it is judged by the first means that the branch instruction is the conditional branch instruction.

The above and other objects, features and advantages of the present invention will be apparent from the following description of preferred embodiments of the invention with reference to the accompanying drawings.

Brief Description of the Drawings

Figure 1 illustrates a delayed slot in the instruction pipelined processing;

Figure 2 is a truth table illustrating the conventional conditional delayed branch;

Figure 3 illustrates a program loop optimized by the system shown in Figure 2;

Figure 4 illustrates a case classification processing program which is complicated by the system shown in Figure 2;

Figure 5 illustrates a case classification processing program when the delayed branch is not used;

Figure 6 is a block diagram of a first embodiment of the data processing system in accordance with the present invention capable of executing the delayed branch processing system in accordance with the present invention;

Figure 7 is a logic circuit diagram of one example of the branch execution discrimination circuit incorporated in the system shown in Figure 6;

Figure 8 is a truth table of determining the delayed instruction execution determination signal in circuit shown in Figure 7; and

Figure 9 is a logic circuit diagram of another example of the branch execution discrimination circuit incorporated in the system shown in Figure 6.

Description of the Preferred embodiments

Referring to Figure 6, there is shown a block diagram of a first embodiment of the data processing system in accordance with the present invention capable of executing the delayed branch processing system in accordance with the present invention.

The shown system includes a fetch instruction address register (instruction counter) 101, a multiplexor 111, an incrementer 112, an instruction memory 113, an instruction invalidation flag latch 121, a decode instruction address latch 122, an instruction word latch 123, an address calculation base/index register 124, a branch execution discrimination circuit 131, a branch condition discrimination circuit 132, an instruction decoder 133, a branch address calculation circuit 134, an instruction decoder 135, a data address calculation circuit 136, a decoded instruction latch 141, an instruction execution data register 142, a data address register 143, an instruction execution unit 151, a data memory 152, and an instruction execution result status register 161, connected as shown in Figure 6.

The shown data processing system has three stages of pipelined processing. In order to synchronize the operation in each stage of the pipelined processing, the three stages are partitioned by the latches 101, 121, 122, 123, 124, 141, 142, 143 and 161.

A content of the fetch instruction address register 101 is supplied to the instruction memory 113, so that an instruction word is read out of the instruction memory 113 in accordance with the value of the instruction address register 101, and then, latched in the instruction word latch 123. The value of the instruction address register 101 is also supplied to the incrementer 112, and incremented by the incrementer 112, so that an address for a next instruction is supplied to the multiplexor 111. The content of the instruction address register 101 is also supplied to the decode instruction register 122.

The branch address calculation circuit 134 calculates a branch destination address such as an instruction counter relative address, on the basis of a content of the decode instruction register 122, a content of the address calculation register 124 and a portion of the content of the instruction word latch 123. A result of the calculation is supplied to the multiplexor 111. On the basis of an output of the branch execution discrimination circuit 131, the multiplexor 111 selects either the next address outputted from the incrementer 112 or the branch destination address outputted from the branch address calculation circuit 134, so that the selected address is supplied to the fetch instruction register 101.

The decoding of the branch instruction is executed at the same time as the instruction next to the branch instruction is fetched. Therefore, the fetching of the branch destination address is executed at a timing next to the timing of the decoding of the branch instruction, as shown in Figure 1. The instruction decoder 133 decodes a portion of the content of the instruction word latch 123, and generates at least the following four signals in the shown embodiment:

(1) signal designating the kind of arithmetic and logic operation
(2) signal indicative of an unconditional branch instruction (unconditional branch instruction decoded signal)
(3) signal indicative of a conditional branch instruction (conditional branch instruction decoded signal)
(4) signal indicative of a delayed branch (delayed branch control signal)

The signal designating the kind of arithmetic and logic operation is supplied to the decoded instruction latch 141. The other signals are supplied to the branch execution discrimination circuit 131.

On the other hand, the instruction decoder 135 decodes a portion of the content of the instruction word latch 123, and generates at least the following two signals in the shown embodiment:

(5) selection signal for the instruction execution data register 142
(6) signal indicative of a condition designated by the instruction in the case of the conditional branch instruction

The latter signal (6) is supplied to the branch condition discrimination circuit 132.

The data address calculation circuit 136 calculates an address for the data memory 152 on the basis of the content of the instruction word latch 123 and the content of the address calculation register 124. A result of the calculation is supplied to and latched in the data address register 143.

The instruction execution unit 151 executes an instruction designated by the decoded instruction latch 141 for a content of the instruction execution data register 142. A result of the execution is written into the instruction execution data register 142 or the instruction execution result status register 161.

The data memory 152 is read out in accordance with the address designated by the data address register 143, and the read-out data is written into the instruction execution data register 142. Alternatively, the data read from the instruction execution data register 142 is written into the data memory 152 in accordance with the address designated by the data address register 143.

On the basis of the signal indicative of the condition designated by the conditional branch instruction, outputted from the instruction decoder 135, and on the basis of the content of the status register 161, the branch condition discriminating circuit 132 discriminates whether or not the condition designated by the conditional branch instruction (for example, "less than") is satisfied. A condition satisfaction discrimination signal is supplied from the branch condition discriminating circuit 132 to the branch execution discriminating circuit 131.

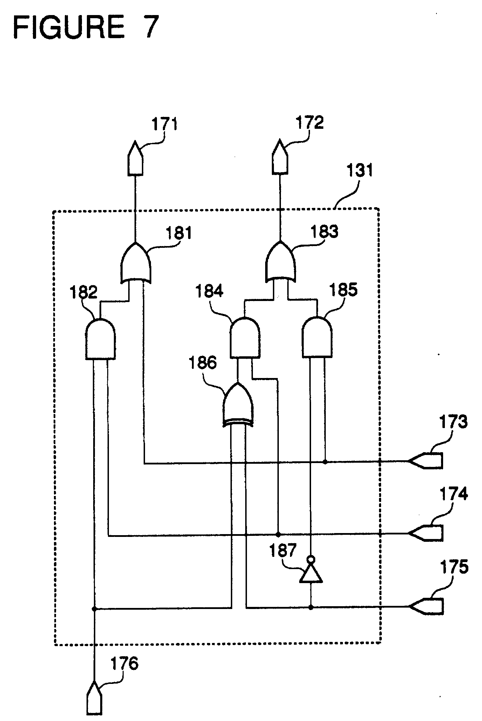

As shown in detail in Figure 7, the branch execution discriminating circuit 131 receives the condition satisfaction discrimination signal 176 from the branch condition discriminating circuit 132, and the unconditional branch instruction decoded signal 173, the conditional branch instruction decoded signal 174 and the delayed branch control signal 175 from the instruction decoder 133, and generates a branch execution determination signal 171 and a delayed instruction execution determination signal 172.

The branch execution discriminating circuit 131 includes an AND gate 182 receiving the condition satisfaction discrimination signal 176 and the conditional branch instruction decoded signal 174, and an OR gate 181 receiving an output of the AND gate 182 and the unconditional branch instruction decoded signal 173 and for generating the branch execution determination signal 171. Thus, the branch execution determination signal 171 is generated similarly to the conventional system. Namely, the branch is executed when the instruction is the unconditional branch instruction or when the instruction is the conditional branch instruction and the condition designated by the conditional branch instruction is satisfied. The branch execution determination signal 171 is supplied to a control input of the multiplexor 111.

The delayed instruction execution determination signal 172 is a feature of the present invention. For generation of this signal, the branch execution discriminating circuit 131 includes an exclusive-OR gate 186 receiving the condition satisfaction discrimination signal 176 and the delayed branch control signal 175, and an AND gate 184 receiving an output of the exclusive-OR gate 186 and the conditional branch instruction decoded signal 174. The branch execution discriminating circuit 131 also includes an AND gate 185 receiving directly the unconditional branch instruction decoded signal 173 and through an inverter 187 the delayed branch control signal 175, and an OR gate 183 receiving outputs of the AND gates 184 and 185 so as to generate the delayed instruction execution determination signal 172.

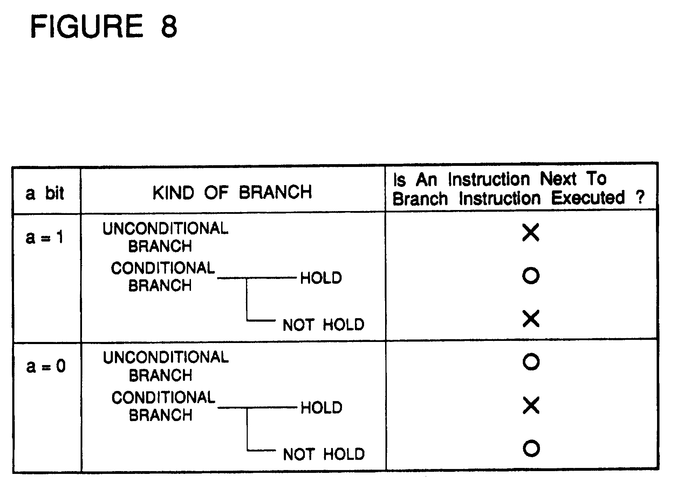

Referring to Figure 8, there is shown a truth table showing the relation between the delayed instruction execution determination signal 172 and the condition satisfaction discrimination signal 176, the unconditional branch instruction decoded signal 173, the conditional branch instruction decoded signal 174 and the delayed branch control signal 175. Namely, the AND gate 185 corresponds to the unconditional branch, and the AND gate 184 corresponds to the conditional branch. The outputs of the AND gates 184 and 185 are supplied through the OR gate 183. In particular, in the case of the conditional branch, an exclusive-OR between the delayed branch control signal 175 corresponding to the "a" bit and the condition satisfaction discrimination signal 176 is obtained by the exclusive-OR gate.

The delayed instruction execution determination signal 172 is latched in the instruction invalidation flag latch 121, so that when the instruction next to the branch instruction is decoded, it is possible to determine, on the basis of the content of the instruction invalidation flag latch 121, whether or not the instruction next to the branch instruction is executed. In the shown embodiment, the content of the instruction invalidation flag latch 121 is supplied to the instruction decoder 133, so that the instruction decoded in the decoder 133 can be invalidated. Thus, the execution of the delayed branch is controlled.

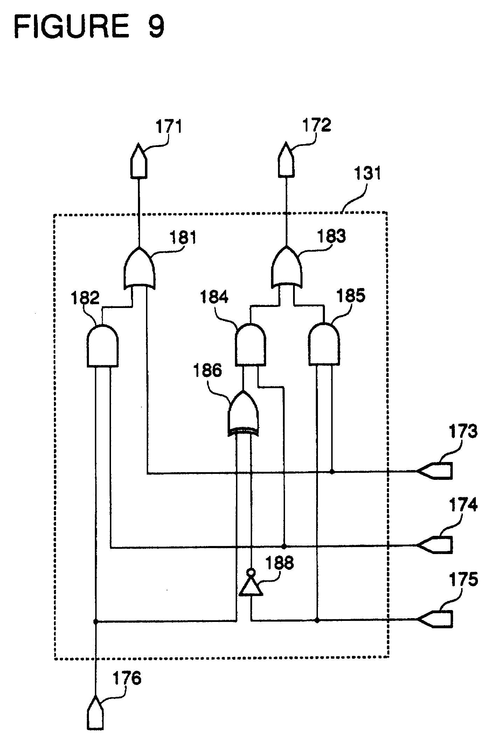

Referring to Figure 9, there is shown another example of the branch execution discriminating circuit 131. As seen from comparison between Figures 7 and 9, the second example is characterized in that the inverter 187 is removed, and an inverter 188 is added between the delayed branch control signal 175 ad the exclusive-OR gate 186. In other words, the positive and negative logic of the delayed branch control signal 175 is inverted. The truth table realized by the branch execution discriminating circuit 131 of Figure 9 can be obtained by substituting $a = 0$ ad $a = 1$ for $a = 1$ (upper column) and $a = 0$ (lower column) in the table of Figure 8, respectively.

In addition, if the inverter 187 is removed from the branch execution discriminating circuit 131 of Figure 7, the meaning of the delayed branch control signal 175 can be modified only for the unconditional branch. Alternatively, if both of the inverter 187 in Figure 7 and the inverter 188 in Figure 9 are provided, the positive and negative logic can be inverted.

As seen from the above, the control system in accordance with the present invention for the delayed branch instruction makes it possible to provide a branch instruction suitable to both of the realization of the loop and the realization of the case classification which are two typical manners of using the conditional branch instruction. Namely, the conditional delayed branch is used for the realization of the loop, and the delayed branch is not used for realization the case classification.

The invention has thus been shown and described with reference to the specific embodiments. However, it should be noted that the present invention is in no way limited to the details of the illustrated structures but changes and modifications may be made.

**Claims**

1. A data processing system capable of determining, on the basis of a delayed branch control bit included in a branch instruction, whether or not an instruction next to the branch instruction should be executed, comprising a first means for decoding a branch instruction to classify said branch instruction into an unconditional branch and a conditional branch, a second means for generating a condition satisfaction signal indicative of whether or not a branch condition is satisfied, and a third means coupled to said first and second means and receiving the delayed branch control bit, said third means generating a delayed instruction execution determination signal indicative of whether or not said instruction next to said branch instruction is executed, on the basis of an exclusive-OR between the delayed branch control bit and said condition satisfaction signal when it is judged by said first means that said branch instruction is a conditional branch instruction.

2. A data processing system comprising:

an instruction counter for generating an address for an instruction to be fetched;

an instruction memory coupled to said instruction counter for outputting an instruction in accordance with said address generated by the said instruction counter;

an instruction register receiving and holding said instruction outputted from said instruction memory;

an incrementer receiving said address generated by the said instruction counter so as to generate an incremented address;

a multiplexor having an output connected to the instruction counter so as to write a new address into the instruction counter, said multiplexor having a first input and a second input and a control input, said first input being connected to an output of said incrementer;

a branch address calculation circuit coupled to at least said instruction register for generating a branch destination address to said second input of said multiplexor;

a first instruction decoder coupled to said instruction register for decoding the instruction held in the said instruction register and generating an arithmetic and logic operation kind signal, an unconditional branch instruction decoded signal, a conditional branch instruction decoded signal, and a delayed branch control signal;

an instruction execution unit controlled by said arithmetic and logic operation kind signal so as to execute a given instruction;

a second instruction decoder coupled to said instruction register for decoding the instruction held in the said instruction register and generating at least a branch condition signal;

a branch condition discrimination circuit receiving a result of operation of said instruction execution unit and said branch condition signal for generating a condition satisfaction discrimination signal; and

a branch execution discrimination circuit receiving said condition satisfaction discrimination signal, said unconditional branch instruction decoded signal, said conditional branch instruction decoded signal, and said delayed branch control signal for generating a delayed instruction execution determination signal when the branch instruction is a conditional branch instruction, dependently upon whether or not the branch condition is satisfied, said delayed instruction execution determination signal being supplied to said first instruction decoder so as to invalidate an instruction decoded in said first instruction decoder.

3. A data processing system claimed in Claim 2 wherein branch execution discrimination circuit includes an exclusive-OR gate receiving said condition satisfaction discrimination signal and said delayed branch control signal, a first AND gate receiving an output of said exclusive-OR gate and said conditional branch instruction decoded signal, a second AND gate receiving directly said unconditional branch instruction decoded signal and through an inverter said delayed branch control signal, and an OR gate receiving outputs of said first and second AND gates so as to generate said delayed instruction execution determination signal.

4. A data processing system claimed in Claim 2 wherein branch execution discrimination circuit includes an exclusive-OR gate receiving directly said condition satisfaction discrimination signal and through an inverter said delayed branch control signal, a first AND gate receiving an output of said exclusive-OR gate and said conditional branch instruction decoded signal, a second AND gate receiving said unconditional branch instruction decoded signal and said delayed branch control signal, and an OR gate receiving outputs of said first and second AND gates so as to generate said delayed instruction execution determination signal.

# FIGURE 1 PRIOR ART

# FIGURE 2 PRIOR ART

| a bit | KIND OF BRANCH | | Is An Instruction Next To Branch Instruction Executed ? |
|---|---|---|---|
| a = 1 | UNCONDITIONAL BRANCH | | ✕ |
| | CONDITIONAL BRANCH | HOLD | ○ |
| | | NOT HOLD | ✕ |
| a = 0 | UNCONDITIONAL BRANCH | | ○ |
| | CONDITIONAL BRANCH | HOLD | ○ |
| | | NOT HOLD | ○ |

# FIGURE 3 PRIOR ART

| ADDRESS | INSTRUCTION | BRANCH DESTINATION |
|---|---|---|
| LOOP : | INSTRUCTION OTHER THAN BRANCH INSTRUCTION | |
| LOOP': | | |
| | | |
| D : | CONDITIONAL BRANCH NOP | LOOP |

# FIGURE 4 PRIOR ART

| ADDRESS | INSTRUCTION | BRANCH DESTINATION |
|---|---|---|
| ADLY : | "A"CONDITIONAL BRANCH<br>"A" "THEN CLAUSE" 1ST INSTRUCTION<br>"A" "ELSE CLAUSE" 1ST INSTRUCTION | ATHEN |
| BDLY : | "B"CONDITIONAL BRANCH<br>"B" "THEN CLAUSE" 1ST INSTRUCTION<br>"B" "ELSE CLAUSE" 1ST INSTRUCTION<br><br>( go to ) | BTHEN |
| ATHEN : | "A" "THEN CLAUSE" 2ND INSTRUCTION<br><br>( go to ) | |
| BTHEN : | "B" "THEN CLAUSE" 2ND INSTRUCTION<br><br>( go to ) | |

# FIGURE 5 PRIOR ART

| ADDRESS | INSTRUCTION | BRANCH DESTINATION |
|---|---|---|
| | "A"CONDITIONAL BRANCH<br>"A" "ELSE CLAUSE" 1ST INSTRUCTION<br>"B"CONDITIONAL BRANCH<br>"B" "ELSE CLAUSE" 1ST INSTRUCTION<br><br>( go to ) | ATHEN<br><br>BTHEN |
| ATHEN : | "A" "THEN CLAUSE" 1ST INSTRUCTION<br>"A" "THEN CLAUSE" 2ND INSTRUCTION<br><br>( go to ) | |
| BTHEN : | "B" "THEN CLAUSE" 1ST INSTRUCTION<br>"B" "THEN CLAUSE" 2ND INSTRUCTION<br><br>( go to ) | |

# FIGURE 6

EP 0 476 628 A2

# FIGURE 7

# FIGURE 8

| a bit | KIND OF BRANCH | Is An Instruction Next To Branch Instruction Executed ? |
|---|---|---|
| a = 1 | UNCONDITIONAL BRANCH | X |
| | CONDITIONAL BRANCH —— HOLD | O |
| | —— NOT HOLD | X |
| a = 0 | UNCONDITIONAL BRANCH | O |
| | CONDITIONAL BRANCH —— HOLD | X |
| | —— NOT HOLD | O |

# FIGURE 9